# EUROPÄISCHE PATENTSCHRIFT

(11) **EP 3 230 366 B1**
(45) Veröffentlichungstag und Bekanntmachung des Hinweises auf die Patenterteilung: **14.03.2018**
(21) Anmeldenummer: 15804718.3
(22) Anmeldetag: 30.11.2015
(51) Int. Cl.: C08L 23/12

(54) **POLYMER-MASTERBATCH ENTHALTEND LINEARES, ULTRAHOCHMOLEKULARES, VINYLGRUPPENFREIES POLYDIMETHYLSILOXAN**
POLYMER MASTER BATCH CONTAINING LINEAR, ULTRA HIGH MOLECULAR POLYDIMETHYLSILOXANES DEVOID OF VINYL GROUPS
MÉLANGE MAÎTRE POLYMÈRE CONTENANT UN POLYDIMÉTHYLSILOXANE LINÉAIRE, À ULTRA HAUT POIDS MOLÉCULAIRE, SANS GROUPES VINYLE

(30) Priorität: 12.12.2014 DE 102014225685
(43) Veröffentlichungstag der Anmeldung: 18.10.2017
(73) Patentinhaber: Wacker Chemie AG, 81737 München (DE)
(72) Erfinder: GECK, Michael, 84489 Burghausen (DE); FUHRMANN, Oliver, 83352 Altenmarkt (DE); POHMER, Klaus, 81739 München (DE)
(74) Vertreter: Mieskes, Klaus Theoderich
(86) Internationale Anmeldenummer: PCT/EP2015/078000
(87) Internationale Veröffentlichungsnummer: WO 2016/091626

(56) Entgegenhaltungen:
- EP-A1- 2 586 825
- "Dow Corning Korea Ltd. Material Safety Data Sheet DOW CORNING(R) MB50-001 MASTERBATCH", , 28. April 2004 (2004-04-28), XP055245330, Gefunden im Internet: URL:http://www.multibase.co.kr/data/smb/MS DS-MB50-001.pdf [gefunden am 2016-01-27]
- KEVIN J. RYAN ET AL: "Ultra-high-molecular-weight functional siloxane additives in polymers. Effects on processing and properties", JOURNAL OF VINYL AND ADDITIVE TECHNOLOGY, Bd. 6, Nr. 1, 1. März 2000 (2000-03-01), Seiten 7-19, XP055245009, US ISSN: 1083-5601, DOI: 10.1002/vnl.10217
- Krishna Joshi ET AL: "Innovations in Silicone Enhanced Thermoplastics", , 19. September 1997 (1997-09-19), XP055245011, Gefunden im Internet: URL:http://www.tami.org.tw/sp1/bulletin/ot her/other_970919-970920-5.pdf [gefunden am 2016-01-26]
- "Silicone Siloxane additives for molding polypropylene and thermoplastic olefins", , 1. Januar 2002 (2002-01-01), XP055245010, Gefunden im Internet: URL:http://www.dowcorning.com/content/publ ishedlit/26-069-01.pdf [gefunden am 2016-01-26]

## Beschreibung

Die Erfindung betrifft Polymer-Masterbatches enthaltend lineare, ultrahochmolekulare, vinylgruppenfreie Polydimethylsiloxane und deren Verwendung als Additive bei der Herstellung von Compounds.

Aus dem Stand der Technik sind Abmischungen oder Polymerzusammensetzungen aus Polyolefinen und Organopolysiloxanen seit langem unter dem Begriff "Masterbatch" oder "Blend" bekannt und werden als Additive oder Prozesshilfsmittel bei der Herstellung von thermoplastischen organischen Polymerabmischungen, den sogenannten "Compounds", eingesetzt.

Beispielsweise beschreibt WO2014/044759A1 die Herstellung von Blends aus Polyolefin und Organopolysiloxan mit einem Polymerisationsgrad von mehr als 4000 und mindestens 2 funktionellen Gruppen wie Vinylgruppen.

EP1153975B1 beschreibt thermoplastische Harzzubereitungen, wobei zwei Blends verwendet werden. Der erste Blend besteht aus einem thermoplastischen Harz und Organopolysiloxan und der zweite Blend ist ein thermoplastisches Harz, welches chemisch an ein Organopolysiloxan gebunden ist, welches Vinyl- oder andere Alkenylgruppen enthält.

EP0710692A2 beschreibt ein Verfahren zur Anbindung von Polyorganosiloxan an Polypropylen. Dazu werden Polyorganosiloxane mit mindestens einem silicongebundenem Vinyl- oder anderem Alkenylradikal verwendet.

In EP0826737B2 wird die Modifizierung von organischen Polymeren mit interaktiven Diorganopolysiloxanen beschrieben. Diese Polysiloxane weisen ein durchschnittliches Molekulargewicht Mn von mindestens 10,000 g/mol und interaktive Gruppen wie Hydroxyl-, Amino- oder Vinylgruppen auf.

In EP0826727A1 wird ein mit interaktiven Diorganopolysiloxanen modifiziertes Polyethylen niederer Dichte beschrieben; diese Polysiloxane weisen ein durchschnittliches Molekulargewicht Mn von mindestens 38,000 g/mol und Hydroxyl-, Amino- oder Vinylgruppen auf.

In EP0722981A2 wird eine Polyolefinzubereitung, enthaltend hydroxyfunktionelles Diorganopolysiloxan mit einem durchschnittlichen Molekulargewicht von mindestens 10,000 g/mol, beschrieben.

US3865897 beschreibt ein Verfahren zur Herstellung von Blends aus Polyolefinen und Polydiorganosiloxanen, wobei hochmolekulare Polydimethylsiloxane mit Vinylgruppen eingesetzt werden.

Die Masterbatches aus dem Stand der Technik werden in den Compounds als Additve eingesetzt, um durch das in ihnen enthaltene Polysiloxan einen Einfluss auf die Anwendungseigenschaften der Compounds zu erreichen, wie beispielsweise Erniedrigung des Reibungskoeffizienten oder Erhöhung der Hydrophobie, Verschleißfestigkeit, Abriebfestigkeit oder Kratzfestigkeit. Der Effekt kann jedoch nicht immer im gewünschten Ausmaß erreicht werden. Daher besteht ein Bedarf an der weiteren Verbesserung der Anwendungseigenschaften solcher Compounds.

Die Aufgabe der vorliegenden Erfindung besteht somit in der Bereitstellung eines Masterbatches für Compounds, der zu einer Verbesserung der Anwendungseigenschaften von Compounds, wie beispielsweise die oben genannten, führt.

Diese Aufgabe wurde überraschenderweise durch den erfindungsgemäßen Polymer-Masterbatch gelöst.

Die erfindungsgemäßen Polymer-Materbatches enthalten
A) mindestens ein thermoplastisches Polypropylen-Homopolymer, und
B) mindestens ein lineares Polydimethylsiloxan mit Trimethylsilyl-Endgruppen
dadurch gekennzeichnet, dass
A) einen Schmelzindex von 5 bis 20 g/10min aufweist, gemessen bei 230°C/2,16kg nach DIN ISO 1133, und
B) ein mittleres Molekulargewicht Mw von mindestens 200.000 g/mol aufweist, und frei von Vinyl-Gruppen ist.

Bevorzugt enthält der erfindungsgemäße Polymer-Masterbatch 40-70 Gew.% A) und 30-60 Gew.% B) und besonders bevorzugt 45-55 Gew.% A) und 45-55 Gew.% B).

Das thermoplastische Polypropylen-Homopolymer A) hat einen Schmelzindex (MFI) von 5-20 g/10min. Dieser wird mit der DIN ISO 1133 bei 230°C/2,16 kg bestimmt.

Die Komponente A) ist seit langem in Form kommerzieller Produkte erhältlich. Je nach Herstellung oder angedachtem Verwendungszweck können in A) bereits folgende Zuschlagstoffe oder Additive, beispielsweise zu deren Stabilisierung, enthalten sein. Dazu zählen Verarbeitungs- und Langzeitstabilisatoren, wie phenolische Antioxidantien, Phosphite, Phosphonite, gegebenenfalls Synergisten wie Thioether sowie Säureakzeptoren wie Ca- oder Zn-Stearat. Solche Additive sind dem Fachmann seit langem bekannt und werden beispielsweise im Lehrbuch Gächter/Müller, Taschenbuch der Kunststoff-Additive 3. Ausgabe, Hanser Verlag 1989; ISBN 3-4446-15627-5 auf Seite 50 ff beschrieben.
A) kann einzeln oder als Mischung aus mindestens 2 thermoplastischen Polypropylen-Homopolymeren eingesetzt werden. Bevorzugt wird A) einzeln eingesetzt.

Die Komponente B) ist dem Fachmann bekannt und ist kommerziell erwerblich. B) ist ein lineares, methylfunktionelles ultrahochmolekulares Polydimethylsiloxan mit einem mittleren Molekulargewicht von mindestens Mw 200.000 g/mol; bevorzugt mindestens 300.000 g/mol und mit einer Viskosität von bevorzugt mindestens 10.000.000 mPas, besonders bevorzugt mindestens 20.000.000 mPas.
B) kann einzeln oder als Mischung aus mindestens 2 linearen, methylfunktionellen, ultrahochmolekularen Polydimethylsiloxanen eingesetzt werden. Bevorzugt wird B) einzeln eingesetzt.

Die Herstellung des erfindungsgemäßen Polymer-Masterbatches erfolgt durch Vermischen von A) und B) bei einer Temperatur, bei der beide in flüssiger Phase vorliegen. Dies kann beispielsweise in einem handelsüblichen, gleichsinnig rotierenden Doppelschneckenextruder, wie er dem Fachmann bekannt ist, erfolgen. Bevorzugt ist der Wert für das Längen-/Durchmesserverhältnis (L/D-Verhältnis) der Schnecken hierbei mindestens 30, besonders bevorzugt mindestens 35.

Die Einarbeitung der Komponente B) in die Schmelze der Komponente A) erfolgt bevorzugt bei Temperaturen von 150-250°C, besonders bevorzugt bei 170-230°C. Nach dem Vermischen wird der Polymer-Masterbatch abgekühlt, beispielsweise in einem Wasserbad. Zur besseren Weiterverarbeitung kann er anschließend granuliert werden.

Der erfindungsgemäße Polymer-Masterbatch wird als Additiv oder Prozesshilfsmittel bei der Herstellung von thermoplastischen Compounds verwendet. Überraschenderweise zeigt sich, dass Oberflächen von Formteilen für Automobilinnenraumanwendungen aus Polypropylen-Compounds, die mit erfindungsgemäßem Polymer-Masterbatch als Additiv hergestellt werden, deutlich bessere Kratzfestigkeit aufweisen als Oberflächen von Formteilen, die gemäß dem Stand der Technik hergestellt wurden, unter Verwendung von Masterbatches, welche interaktive Organopolysiloxane enthalten.

### Beispiele

Die folgenden Beispiele dienen der Erläuterung der Erfindung ohne diese zu beschränken. Falls nicht anders angegeben wurde unter Normaldruck bei 1013 mbar gearbeitet.

### Beispiele für Herstellung von Polymer-Masterbatches

### Beispiel 1 (erfindungsgemäß)

Polypropylen-Homopolymer-Granulat mit Schmelzindex 12 g/10min (bestimmt nach DIN ISO 1133, bei 230°C/2,16 kg), beispielsweise erhältlich unter der Bezeichnung MOSTEN® NB 112 bei der Firma Unipetrol, Prag, Tschechische Republik, wurde gravimetrisch im Einzugsbereich mit einer Dosierrate von 12 kg/h in einen Doppelschneckenextruder ZSE 27 HP der Fa. Leistritz, Nürnberg, Deutschland mit einem Länge/Durchmesserverhältnis von 40 und einem Schneckendurchmesser von 27 mm dosiert. Die durchschnittliche Schneckentemperatur betrug 170 °C bis 210 °C. Vinylgruppenfreies, lineares, ultrahochmolekulares Polydimethylsiloxan mit Trimethylsilyl-Endgruppen und einem mittleren Molekulargewicht Mw von 533,000 g/mol (käuflich erhältlich bei Fa. Wacker Chemie AG, München, Deutschland unter der Bezeichnung GENIOPLAST® Gum) wurde in gleichen Gewichtsanteilen ebenfalls mit einer Dosierrate von 12 kg/h zu dem Polypropylen dazudosiert. Das Extrudat wurde in einen Wasserbad gekühlt und granuliert. Der Gehalt an ultrahochmolekularem Polydimethylsiloxan wurde über elementanalytische Siliziumbestimmung nach Wurtzschmidt-Aufschluss indirekt bestimmt und ergab einen Gehalt von 48,2%.

### Beispiel 2 (erfindungsgemäß)

Polypropylen-Homopolymer-Granulat mit Schmelzindex 7 g/10min (bestimmt bei 230°C/2,16 kg), beispielsweise erhältlich unter der Bezeichnung MOSTEN® GB 107 bei der Firma Unipetrol, Prag, Tschechische Republik, wurde gravimetrisch im Einzugsbereich mit einer Dosierrate von 12 kg/h in einen Doppelschneckenextruder ZSE 27 HP der Fa. Leistritz, Nürnberg, Deutschland mit einem Länge/Durchmesserverhältnis von 40 und einem Schneckendurchmesser von 27 mm dosiert. Die durchschnittliche Schneckentemperatur betrug 170 °C bis 210 °C. Vinylgruppenfreies, lineares, ultrahochmolekulares Polydimethylsiloxan mit Trimethylsilyl-Endgruppen und einem mittleren Molekulargewicht Mw von 533,000 g/mol (käuflich erhältlich bei Fa. Wacker Chemie AG, München, Deutschland unter der Bezeichnung GENIOPLAST® Gum) wurde in gleichen Gewichtsanteilen ebenfalls mit einer Dosierrate von 12 kg/h zu dem Polypropylen dazudosiert. Das Extrudat wurde in einen Wasserbad gekühlt und granuliert. Der Gehalt an ultrahochmolekularem Polydimethylsiloxan wurde über elementanalytische Siliziumbestimmung nach Wurtzschmidt-Aufschluss indirekt bestimmt und ergab einen Gehalt von 47,9%.

### Beispiel 3 (nicht erfindungsgemäß)

Als Vergleichs-Masterbatch wird ein kommerziell erhältlicher Masterbatch verwendet: DOW CORNING® MB50-001 von Fa. Multibase (A Dow Corning Company); Saint Laurent du Pont, FRANKREICH. Er besteht aus 50% PP Homopolymer mit MFI 12 und 50% ultrahochmolekularem, dimethylvinyl-terminiertem PDMS (laut Herstellerangaben).

### Herstellung von Polypropylen Compounds

Vier Compounds (Zusammensetzung gemäß Tabelle 1) wurden auf einem KraussMaffei Berstorff, (Hannover, Deutschland) ZE 25 Doppelschneckenextruder mit einem Länge/Durchmesserverhältnis von 47 und einem Schneckendurchmesser von 25 mm bei einer Temperatur von 185-190°C, einer Schneckendrehzahl von 400 U/min und einem Durchsatz von 10 kg/h compoundiert. Dazu wurden alle Granulatbestandteile zu einem Dry-Blend gemischt und der Dry-Blend gravimetrisch in den Einzugsbereich des Extruders dosiert. Ebenso wurden alle pulverförmigen Bestandteile zu einem Dry-Blend gemischt und dieser Dry-Blend ebenfalls gravimetrisch in den Einzugsbereich des Extruders dosiert. Das resultierende Extrudat wurde in einen Wasserbad gekühlt und granuliert.

Die folgenden Abkürzungen entsprechen den folgenden Edukten:
1. PP MIC = Polypropylen Medium Impact Copolymer, mit Schmelzindex 33 g/10min (230°C/2,16 kg) nach DIN ISO 1133; von SABIC Europe, Sittard, Niederlande
2. POE = Polyolefin Elastomer; Dichte 0.87 g/cm³, Schmelzindex 5 g/10min (190°C/2,16 kg) nach DIN ISO 1133; von Dow Chemical Company, Midland, MI, USA
3. Talk = Talk von JetFine® 3CA von Imerys, Paris, Frankreich.
4. CBM = PLASBLAK® LL2590 von Cabot Corporation, Boston, MA, USA
5. MB Bsp. 1 = Masterbatch aus Beispiel 1
6. MB Bsp. 2 = Masterbatch aus Beispiel 2
7. MB Bsp. 3 = Masterbatch aus Beispiel 3 (nicht erfindungsgemäß)

**Tabelle 1**

| **Compound** | **A** | **B** | **C** | **D** |
|---|---|---|---|---|
| Bestandteil | Gewichtsteile | | | |
| 1. PP MIC | 67,2 | 67,2 | 67,2 | 67,2 |
| 2. POE | 10,0 | 10,0 | 10,0 | 10,0 |
| 3. Talk | 20,0 | 20,0 | 20,0 | 20,0 |
| 4. CBM | 2,0 | 2,0 | 2,0 | 2,0 |
| 5. MB Bsp. 1 | - | 3,0 | - | - |
| 6. MB Bsp. 2 | - | - | 3,0 | - |
| 7. MB Bsp. 3 | - | - | - | 3,0 |
| 8. Kalziumstearat | 0,2 | 0,2 | 0,2 | 0,2 |
| 9. Antioxidant, UV-Stabilisator | 0,6 | 0,6 | 0,6 | 0,6 |

### Herstellung von Spritzgussplatten aus den Compounds A bis D

Aus den so hergestellten Polypropylen Compounds A bis D wurden auf einer Engel ES 600/125 Spritzgussmaschine bei 190-250°C, einer Einspritzrate von 40 mm/s, einem Gegendruck von 5 bar und einem Haltedruck von 25 bar Spritzgussplatten mit genarbter Oberfläche (repräsentativ für Automobilinnenraumanwendung) und Dimensionen von 8 cm x 12 cm und einer Dicke von 2 mm angefertigt.
Aus Compound A wurden Platten A gefertigt.
Aus Compound B wurden Platten B gefertigt.
Aus Compound C wurden Platten C gefertigt.
Aus Compound D wurden Platten D gefertigt.

### Untersuchung der Oberflächen der Spritzgussplatten A bis D auf Kratzfestigkeit: Kurzzeitstudie

Die Spritzgussplatten aus A bis D wurden für 2 Tage im Normklima bei 23°C und 50% relativer Luftfeuchtigkeit gelagert. Nach Lagerung wurden mit einem Ritzhärteprüfgerät der Fa. Erichsen, Hemer, Deutschland (Modell 430 P-I) auf den genarbten Oberflächen Kratzer mit einer Kraft von 10 N bei einer Geschwindigkeit von 1000 mm/min appliziert. Das hierbei verwendete Werkzeug hatte eine abgerundete Spitze mit einem Durchmesser von 1 mm. Es wurden jeweils 20 parallele Linien in einem Abstand von 2 mm und in einem 90° Winkel senkrecht dazu nochmals 20 parallele Linien in einem Abstand von 2 mm appliziert, so dass ein gitterförmiges Kratzmuster entstand. Die Kratzfestigkeit wurde durch Messung der Differenz der Helligkeit zwischen der gekratzten Fläche und der nicht gekratzten Fläche an jeweils derselben Platte quantifiziert. Die Differenz in den Helligkeiten (ΔL) wurde mit einem Farb- und Glanzmessgerät der Fa. Erichsen, Hemer, Deutschland (Modell Spektromaster 565-45) bestimmt. Die Ergebnisse sind in Tabelle 2 zusammengefasst.

### Untersuchung der Oberflächen der Spritzgussplatten A bis D auf Kratzfestigkeit: Langzeitstudie

Die Spritzgussplatten aus A bis D wurden für 7 Tage bei 80°C gelagert um eine beschleunigte Alterung zu erreichen. Nach Lagerung wurden sie analog der Kurzzeitstudie untersucht. Die Ergebnisse sind in Tabelle 2 zusammengefasst.

**Tabelle 2**

| **Spritzgussplatte** | **A** | **B** | **C** | **D** |
|---|---|---|---|---|
| ΔL Kurzzeitstudie | 6,0 | 0,4 | 0,3 | 0,6 |
| ΔL Langzeitstudie | 4,6 | 0,1 | 0,0 | 0,6 |

Je kleiner der ΔL-Wert, desto weniger sichtbar ist das applizierte Kratzmuster. Somit ist die Kratzbeständigkeit umso besser, je kleiner der ΔL-Wert ist.

Die Ergebnisse aus Tabelle 1 zeigen, dass die Spritzgussplatten B und C, die aus Compounds, die mit erfindungsgemäßen Polymer-Masterbatches gemäß Beispielen 1 und 2 hergestellt wurden, niedrigere ΔL-Werte aufweisen und damit eine bessere Kratzbeständigkeit erreicht wird.

## Patentansprüche

1. Polymer-Masterbatch enthaltend
A) mindestens ein thermoplastisches Polypropylen-Homopolymer, und
B) mindestens ein lineares Polydimethylsiloxan mit Trimethylsilyl-Endgruppen
**dadurch gekennzeichnet, dass**
A) einen Schmelzindex von 5 bis 20 g/10min aufweist, gemessen bei 230°C/2,16kg nach DIN ISO 1133, und
B) ein mittleres Molekulargewicht Mw von mindestens 200.000 g/mol aufweist, und frei von Vinyl-Gruppen ist.

2. Polymer-Masterbatch gemäß Anspruch 1, **dadurch gekennzeichnet, dass** er 40-70 Gew.% A) und 30-60 Gew.% B) enthält.

3. Polymer-Masterbatch gemäß Anspruch 1, **dadurch gekennzeichnet, dass** er 45-55 Gew.% A) und 45-55 Gew.% B) enthält.

4. Verfahren zur Herstellung des Polymer-Masterbatches gemäß einem der Ansprüche 1 bis 3, durch vermischen von A) und B) bei einer Temperatur, bei der beide in flüssiger Phase vorliegen.

5. Verwendung des Polymer-Masterbatches gemäß einem der Ansprüche 1 bis 3 als Additiv oder Prozesshilfsmittel bei der Herstellung von thermoplastischen Compounds.

## Claims

1. Polymer masterbatch comprising
A) at least one thermoplastic polypropylene homopolymer and
B) at least one linear polydimethylsiloxane having trimethylsilyl end groups,
**characterized in that**
A) has a melt flow index of 5 to 20 g/10 min, measured at 230°C/2.16kg to DIN ISO 1133, and
B) has an average molecular weight Mw of at least 200 000 g/mol and is free from vinyl groups.

2. Polymer masterbatch according to Claim 1, **characterized in that** it comprises 40-70 wt% of A) and 30-60 wt% of B).

3. Polymer masterbatch according to Claim 1, **characterized in that** it comprises 45-55 wt% of A) and 45-55 wt% of B).

4. Process for producing the polymer masterbatch according to any of Claims 1 to 3 by mixing A) and B) at a temperature at which both are present in the liquid phase.

5. Use of the polymer masterbatch according to any of Claims 1 to 3 as an additive or process auxiliary in the production of thermoplastic compounds.

## Revendications

1. Mélange maître de polymère contenant
A) au moins un homopolymère thermoplastique de polypropylène et
B) au moins un polydiméthylsiloxane linéaire présentant des groupes terminaux de type triméthylsilyle
**caractérisé en ce que**
A) présente un indice de fusion de 5 à 20 g/10 min, mesuré à 230°C/2,16 kg selon la norme DIN ISO 1133, et
B) présente un poids moléculaire moyen Mw d'au moins 200.000 g/mole et est exempt de groupes vinyle.

2. Mélange maître de polymère selon la revendication 1, **caractérisé en ce qu'**il contient 40-70% en poids de A) et 30-60% en poids de B).

3. Mélange maître de polymère selon la revendication 1, **caractérisé en ce qu'**il contient 45-55% en poids de A) et 45-55% en poids de B).

4. Procédé pour la préparation du mélange maître de polymère selon l'une quelconque des revendications 1 à 3, par mélange de A) et de B) à une température à laquelle les deux se trouvent en phase liquide.

5. Utilisation du mélange maître de polymère selon l'une quelconque des revendications 1 à 3 comme additif ou adjuvant de transformation lors de la préparation de compounds thermoplastiques.
